**Europäisches Patentamt**

**European Patent Office**

**Office européen des brevets**

(19)

(11) Publication number: **0 011 653**

**B1**

(12) # EUROPEAN PATENT SPECIFICATION

(45) Date of publication of patent specification: **20.01.82**

(51) Int. Cl.³: **B 60 C 15/00**

(21) Application number: **79900438.7**

(22) Date of filing: **23.04.79**

(86) International application number:
**PCT/JP79/00103**

(87) International publication number:
**WO 79/00976 29.11.79 Gazette 79/24**

(54) **IMPROVED RADIAL-PLY TIRE.**

(30) Priority: **24.04.78 JP 48884/78**

(43) Date of publication of application:
**11.06.80 Bulletin 80/12**

(45) Publication of the grant of the European patent:
**20.01.82 Bulletin 82/3**

(84) Designated Contracting States:
**FR**

(56) References cited:
**DE - A - 2 611 482**
**FR - A - 2 357 386**
**GB - A - 1 477 858**
**JP - B2 - 52-11481**
**JP - Y2 - 53-15046**
**US - A - 3 253 636**
**US - A - 3 853 163**
**US - A - 4 024 901**

(73) Proprietor: **TOYO RUBBER INDUSTRY CO., LTD.**
**17-18, 1-chome, Edobori Nishi-ku**
**Osaka-shi, Osaka 550 (JP)**

(72) Inventor: **INOUE, Teruo**
**9-26, 2-chome, Miyamachi**
**Yao-shi, Osaka 581 (JP)**

(74) Representative: **Rinuy, Guy et al,**
**14 Avenue de la Grande Armée**
**F-75017 Paris (FR)**

Courier Press, Leamington Spa, England.

Improved radial-ply tire

### TECHNICAL FIELD

This invention relates to an improvement in radial tires, and more particularly to an improvement in bead structure of radial tires comprising carcass plies made of polyester cords having their ends folded around bead wires and reinforcing steel chafer made of metallic cords outside the folded ends of the carcass plies, or radial tires further comprising a reinforcing layer of organic fiber outside the steel chafer in addition thereto.

### BACKGROUND ART

Polyester cords are most desirable as carcass ply material for radial tires. Because they undergo less deterioration in strength and adhesion due to moisture and enjoy a higher fatigue resistance than steel cords and also they show a less degree of growth of tires than nylon cords.

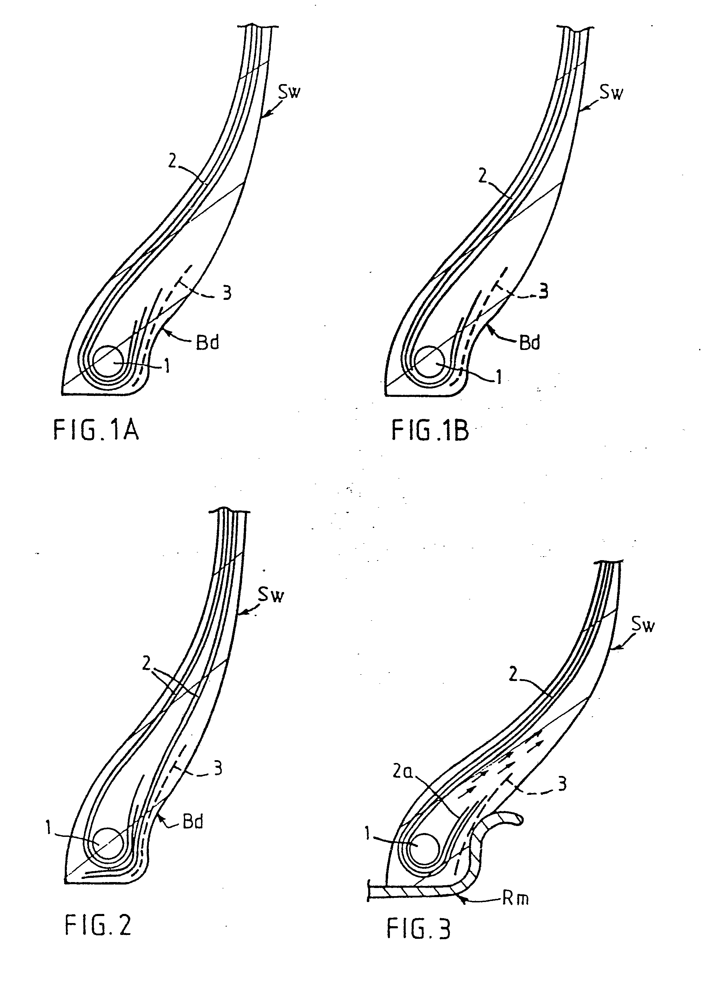

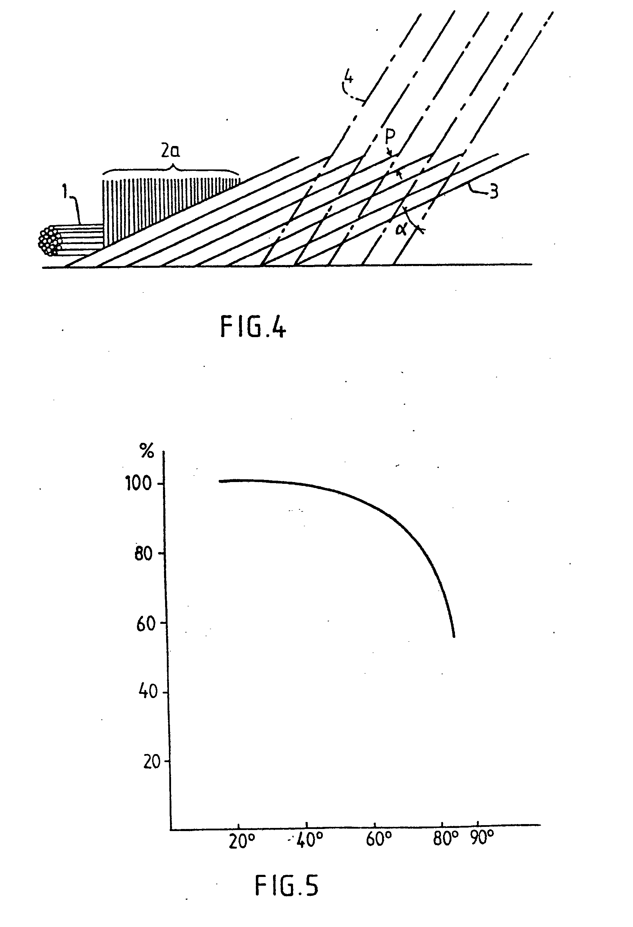

Several carcass ply structures are well known: all of the carcass plies are folded from the inside of the bead wires to outside (FIG. 1A); some of the carcass plies terminates at the inside or lower end of the bead wires and the remaining is folded from the inside of the bead wires to outside (FIG. 1B); some of the carcass is folded from the inside of the bead wires to outside and the remaining is folded from the outside of the bead wires to inside (FIG. 2) and so forth. The former two structures (FIGS. 1A and 1B) are easier to manufacture and more popular than the latter structure (FIG. 2), whereas the former structures are inferior to the latter in rigidity at the bead region and also inferior even to the same structure using steel cords. Accordingly, those structures undergo great deformation in use so that stress is concentrated on the folded ends of the carcass plies and upper end of steel chafer.

The elongation of cords of the carcass plies due to tension exerted thereupon during use of the tires is approximately 0.5% in the case of the carcass plies of steel cords and approximately 5% in the case of the carcass plies of polyester cords. As denoted by the arrow in FIG. 3, the relative distortion occurred between the folded ends of the carcass plies or the upper end of the steel chafer and the rubbers surrounding therearound is increased so that separations are easily caused at the folded ends of the carcass plies and the upper end of the steel chafer due to the cooperation of the concentration of stress mentioned above.

As countermeasures, there are provided such structures that the bead region is made of hard rubber or the folded ends of the carcass plies terminate at a position higher than the steel chafer. But they are deficient in providing satisfactory results in durability. While a large number of the cords are used in the carcass plies to maintain the strength of the carcass plies, there appear a large number of cord ends in the cross sections of the folded ends of the carcass plies. The cross sections of the folded ends are difficult to be subject to agent treatments and are left as they are. It is also one of the reasons for easely causing separations. Concerning the structure wherein the carcass plies terminate at a position higher than the steel chafer, the folded ends of the carcass plies terminate in the region subjected to great load deformation during use of the tires, and it rather presents another cause of separation. The folded ends of the carcass plies are disposed at an angle of about 90° with respect to the circumferential direction as well as the carcass plies themselves, and it is impossible to absorb load deformation of the tires so that the folded ends behave so as to peck the surrounding rubbers, and accelerating separations.

It is therefore desirable that the folded ends of the carcass plies terminate at the lower position than the upper end of the steel chafer where deformation is relatively small. The upper end of the steel chafer are free and small in rigidity and particularly bending rigidity than the central portion thereof, and the rigidity is increased in proportion to approach to center portion from the upper end.

Therefore, it is necessary to decide the height of the folded ends of the carcass plies and the height of the steel chafer by collectively judging from the relative position between the folded ends of carcass plies and the steel chafer itself in order to employ the properties of the steel chafer efficiently, and the separation resistance properties at the upper end of the steel chafer.

Furthermore, in radial tires which are used repeatedly at a heavy duty for a long time with retreading, for instance, in radial tires for use in trucks and buses, separations come into question in the vicinity of the upper end of the steel chafer. In other words, differences in rigidity necessarily appear in the vicinity of the upper end of the steel chafer to cause separations easily. In addition, the upper end of the steel chafer per se is free and easy to move due to load deformation while the tires are in use, thus inducing and even accelerating such separations.

Accordingly, it is an object of the present invention to provide highly durable radial tires having the separation resistance improved at the bead regions by improving the relative position between folded ends of carcass ply cords made of polyester cords and steel chafer, that is, the relationship between the height of steel chafer and the height of the folded ends of the carcass ply cords.

It is another object of the present invention to provide highly durable, long-life radial tires which are free of separations in the vicinity of the upper end of steel chafer even under heavy duty, long-term, repetitive and recycling working conditions.

## DISCLOSURE OF INVENTION

A radial tire according to the present invention has the following features to achieve the above discussed objects. One of the important features of the present invention is that the maximum height (h) of folded ends of the carcass plies is selected to be not more than 85% of the height (H) of steel chafer, i.e., $h \leq 0.85\,H$ and the height (H) of steel chafer is selected in the range of 15—28% of the inner height (IH) of the tire in the case where the cord angle of steel chafer is 15°—45° with respect to the circumferential direction of the tire. As another feature of the present invention, a reinforcing layer of organic fiber cords is disposed outside the steel chafer in such a manner as to cover the upper end of the steel chafer in order to increase separation resistance in the vicinity of the upper end of steel chafer and the cords of the reinforcing layer are disposed at an angle of 20°—75° with respect to the circumferential direction of the tire and crossing the steel chafer cords at an angle of 10° or more.

## BRIEF DESCRIPTION OF DRAWINGS

FIGS. 1A, 1B and 2 are schematic representations of several kinds of carcass ply structures, the carcass ply structures for radial tires shown in FIGS 1A and 1B being of interest for the present invention;

FIG. 3 is a representation for explanation of relative distortion or strain caused between the folded ends of the carcass plies or the upper end of the steel chafer and the surrounding rubber in a prior art bead structure;

FIG. 4 is a representation showing the cord alignments of the folded ends of the carcass plies, the steel chafer external thereto and the organic fiber reinforcing layer further external thereto;

FIG. 5 is a graph showing the relationship between the cord angle (abscissa) and the strength retention coefficient (ordinate) of the organic fiber reinforcing layer;

FIG. 6 is a representation of an improved radial tire according to the present invention; and

FIG. 7 is a representation of another improved radial tire including the organic fiber reinforcing layer external to the steel chafer according to the present invention.

## BEST MODE FOR CARRYING OUT THE INVENTION

FIGS. 1A, 1B and 2 show the examples of carcass ply structure. In FIG. 1A, all of the carcass plies 2 are folded from inside of the bead wires 1 to outside and a steel chafer 3 is provided outside of the bead wires 1. In FIG. 1B, some of the carcass plies 2 terminates at the inside or lower side of the bead wires 1 and the remaining carcass plies are folded from the inside of the bead wires 1 to the outside and a steel chafer 3 is provided outside of the bead wires 1. FIG. 2 illustrates a different structure where some of the carcass plies 2 are folded from the inside of the bead wires 1 to the outside and the remaining carcass plies are folded outside of the bead wires 1 to the inside. The structure of FIG. 2 shows a relatively good rigidity in the bead region Bd but is complicated to manufacture. Although the structures of FIGS 1A and 1B are relatively easy to manufacture, the rigidity of the bead region Bd is lower so that the structures undergo greater deformation in use and stress is concentrated on the folded ends of the carcass plies and the upper end of the steel chafer 3. Moreover, as indicated in FIG. 3, since the carcass plies using polyester cords have a large elongation, relative strain between the folded ends of the carcass plies or the upper end of the steel chafer and the surrounding rubber is increased to present the possibility of separations in the vicinity of the folded ends of the carcass plies 2 and the upper end of the steel chafer 3 due to the cooperation of the above concentration of stress. By the way, in the drawings, the symbol Sw shows a side wall.

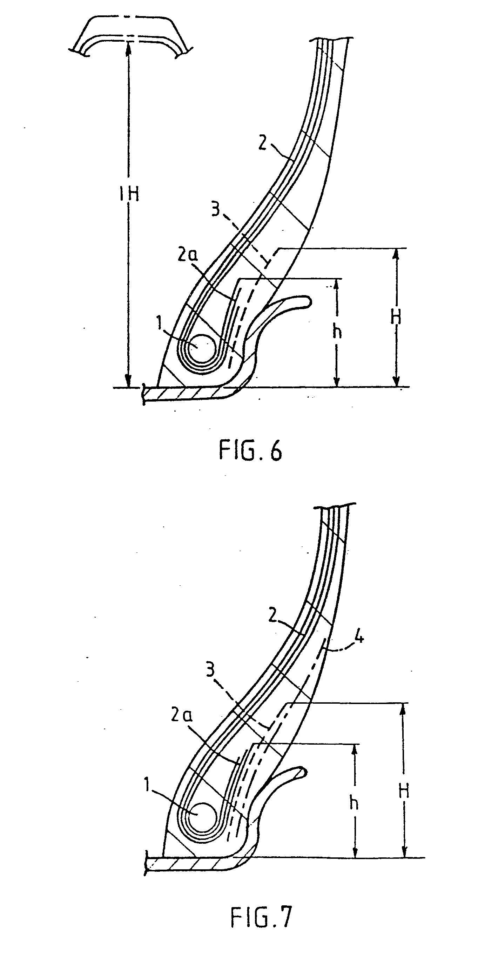

The present invention is concerned with radial tires having the carcass ply structures as shown in FIGS 1A and 1B and nevertheless improves remarkably the separation resistance at the bead region. FIG. 6 shows one embodiment of the radial tires according to the present invention having the carcass ply structure wherein all the carcass plies 2 are folded from the inside of the bead wires 1 to the outside. In the structure, the height h of the highest one of the folded ends 2a of the carcass plies 2 is determined as $h \leq 0.85\,H$ with relation to the height H of the steel chafer 3 and thus the highest one is located to be not more than 85% of the height of the stell chafer 3. The height H of the steel chafer 3 is defined in the range of 15—28% of the inner height (IH) of the tire when the steel chafer is aligned at an angle of 15°—45° with respect to the circumferential direction of the tire, so as to assure the reinforcing effects of the steel chafer and inhibit the occurrence of separations at the upper end of the steel chafer 3.

Table 2 sets forth the results of tests for investigating the influences of the relationship between the height H of the steel chafer and the maximum height h of the folded ends of the carcass plies, which affect upon the failures in the bead region of tires. Test tires were 1000 R 20, 14PR and all of three carcass plies using 1500 d/3 polyester cords are folded from the inside of the bead wires to the outside and a steel chafer was aligned at an angle of 25° with respect to the circumferential direction of tires.

**0011653**

TABLE 1

| Item<br>Tire<br>No. | Steel chafer<br>height (h.mm) | Carcass ply<br>folded end<br>maximum height<br>(h.mm) | h /H | Running<br>distance<br>(Km) | Failure |
|---|---|---|---|---|---|
| A | 55 | 78 | 1.42 | 6400 | ply end separated |
| B | 55 | 65 | 1.18 | 5800 | ditto |
| C | 55 | 50 | 0.91 | 9300 | ditto |
| D | 55 | 45 | 0.82 | 12000 | no failure |
| E | 60 | 78 | 1.30 | 6700 | ply end separated |
| F | 60 | 55 | 0.92 | 8900 | ditto |
| G | 60 | 50 | 0.83 | 12000 | no failure |

Apparent from the above table, separations occurred at the ply ends with tires A, B, C, E and F having the maximum height h of the carcass ply folded ends as high as more than 85% of the height H of the steel chafer at a running distance from 5,800 Km to 9,300 Km, but on the contrary no separations were experienced for a running distance up to 12,000 Km in the tires where the height h was less than 85% of the height H. Those test results were obtained from the structure wherein all the carcass plies were folded from the inside of the bead wires to the outside as shown in FIGS. 1A and 6, but the same results are obtainable also in the structure where some of the carcass plies terminates at the inside or lower end of the bead wires as shown in FIG. 1B.

Under the normal working conditions, the structure mentioned above improves remarkably separation resistance properties of the bead region, however, for radial tires working repeatedly under heavy duty, long-term, and recycling conditions, for instance, radial tires for trucks and buses, there is still a possibility of causing and accelerating separations in the vicinity of the upper end of the steel chafer and inducing failures in the bead region.

The radial tires having a carcass structure wherein the carcass plies are made of polyester cords and all or most of the carcass plies are folded from the inside to the outside around bead wires, as in the case of the present invention, exhibit a lower rigidity particularly in bending rigidity and show a greater deformation in use than tires having carcass plies of steel cords or tires of the structure as shown in FIG. 2.

In those tires affected by a great load deformation, a rigidity differentia at the upper end of the steel chafer and movability of the upper end of steel chafer impair remarkably the separation resistance properties of the bead region. In particular, the cords movement at the upper end of the steel chafer tends to make the cord spacing P (cf. FIG. 4) wider under heavy duty conditions, thus promoting the separation of the cords from the surrounding rubber.

The present invention is also intended to avoid the above problem and another embodiment for the purpose is shown in FIG. 7. As shown in the drawing, the maximum height h of the folded end 2a of the carcass plies 2 and the height H of the steel chafer 3 are correlated as h≦0.85 H similarly to the above, and in addition thereto at least one reinforcing layer 4 of organic fiber is disposed outside the steel chafer 3. The reinforcing layer 4 is so positioned to extend from the bottom of the bead region Bd to a position above the upper end of the steel chafer to cover the upper end. The organic fiber cords of the reinforcing layer 4 are aligned at an angle of 20°—75° with respect to the circumferential direction of the tire and with a crossing angle $\alpha$ (cf. FIG. 4) of 10° or more in relation to the cords of the steel chafer.

The above structure reduces the rigidity differentia in the vicinity of the upper end of the steel chafer and suppresses movement of the free and easily movable upper end of the steel chafer. The alignment angle of the organic fiber cords is of great importance. That is to say, while the rigidity differentia developing at the upper end of the steel chafer becomes smaller by providing the organic fiber reinforcing layer outside the steel chafer, the rigidity and particularly bending rigidity of the cords of the steel chafer is still larger than that of the cords of the reinforcing organic fiber. Then, the concentration of stress on the upper end of the steel chafer is unavoidable during use of the tire. Such concentrated stress is transmitted to the organic fiber reinforcing layer outside the steel chafer, causing a great local strain in the vicinity of the upper end of the steel chafer. In the case that the cord angle of the organic fiber reinforcing layer is great with respect to the circumferential direction of the tire, the cord angle neither varies per se nor absorbs such strain. As a result, the organic fiber reinforcing layer would become weary and eventually broken. Therefore, in the present invention, pursuant to the investigation into the influences of the alignment angle of the reinforcing organic fiber cords with relation to the circumferential direction of the tire and the crossing angle $\alpha$ thereof with the steel chafer cords, the optimum angle is decided as 20°—75° for the former and 10° or more for the latter.

FIG. 5 is a graph showing the relationship between the angle of the organic fiber reinforcing layer with respect to the circumferential direction of the tire and the strength retention coefficient, wherein a new tire is denoted as 100. It is apparent from the graph that the strength retention coefficient drops abruptly if the cord angle of the organic fiber reinforcing layer is in excess of 75°.

In addition, Table 2 represents the results of tests on the influences upon the durability of the bead region affected by the crossing angle of the cords of the reinforcing organic fiber layer with the cords of the steel chafer. Test tires were 1000 R 20 and 14 PR and had three carcass plies using 1500 d/3 polyester cords. The height H of the steel chafer was 55 mm, the maximum height h of the folded ends of the carcass plies was 45 mm and the organic fiber reinforcing layer contained 840 d/2 cords with 20 end counts/25 mm. The angle (chafer angle) of the steel chafer with respect to the tire circumferential direction was 25° and 30°, and the angle (reinforcing layer cord angle) of the organic fiber reinforcing layer with respect to the circumferential direction of the tire was five choices and the crossing angle ($\alpha$) of steel chafer cords with the organic fiber reinforcing layer cords was also five choices. Test conditions were JIS load of 2700 (kg) x 180%, air pressure of 7.25 Kg/cm² and a running distance of 15000 Km, by indoor test.

TABLE 2

| Item Tire No. | Chafer angle | Reinforcing layer cord angle | Crossing agle (a) | Evaluation after disassembly of tires |
|---|---|---|---|---|
| I | 25° | 15° | 10° | cracks in steel chafer end |
| II | 25° | 25° | 0° | 15mm separation of steel chafer cords |
| III | 25° | 30° | 5° | 12mm separation of steel chafer cords |
| IV | 25° | 40° | 15° | 3mm separation of steel chafer cords |
| V | 30° | 30° | 0° | 12mm separation of steel chafer cords |
| VI | 30° | 40° | 10° | 4—5mm separation of steel chafer cords |
| VII | 30° | 50° | 20° | 2—3mm separation of steel chafer cords |

As is obvious from the above table, in the tires having the organic fiber reinforcing layer whose cord angle was 20°—75° with respect to the tire circumferential direction outside of the steel chafer whose cord angle was 15—45 with respect to the tire circumferential direction of the tire, tires II, III and V where the crossing angle of the reinforcing organic fiber cords with the steel chafer cords was either 0° or 5° gave unsatisfactory results, while tires I and VI having the crossing angle of 10° and tires IV and VII having the crossing angle of more than 10° showed great improvement in durability. It is clear that a crossing angle of not less than 10° enhances the durability of bead region.

## Claims

1. A radial tire comprising a carcass ply structure (2) wherein all or part of carcass plies made of a plurality of polyester cords are folded from the inside of bead wires to the outside and the remaining carcass plies terminate at the inside or lower portion of the bead wires and a steel chafer (3) outside the folded portions of the carcass plies, characterized in that the angle of steel chafer (3) is in the range of 15°—45° with respect to the tire circumferential direction, the height H of the steel chafer (3) is in the range of 15—28% of the tire inner height (IH) and the maximum height h of the folded portions of the carcass plies (2) is not more than 85% of the height H of the steel chafer.

2. A radial tire according to Claim 1, further comprising at least one reinforcing layer of organic fiber cords provided outside the steel chafer (3) and extending above the upper end of the steel chafer, the crossing angle of the reinforcing layer cords with the steel chafer cords being not less than 10° and the angle of the reinforcing layer cords is 20°—75° with respect to the tire circumferential direction.

## Patentansprüche

1. Radialreifen mit einer Karkassenlagenstruktur (2), worin alle oder ein Teil der Karkassenlagen, die aus einer Mehrzahl von Polyesterkords hergestellt sind, von der Innenseite der Wulstdrähte·nach außen umgelegt sind und die übrigen Karkassenlagen an der Innenseite oder im unteren Abschnitt der Wulstdrähte·enden, und ein Abriebprotektor (3) aus Stahl an der Außenseite der umge-legten Abschnitte der Karkassenlagen vor-handen ist, dadurch gekennzeichnet, daß der Winkel der Stahlabriebprotektorkords (3) im Bereich von 15°—45° bezüglich der Umfangsrichtung des Reifens liegt, die Höhe H des Stahlabriebprotektors (3) im Bereich von 15—28%· der Reifeninnenhöhe (IH) liegt und die maximale Höhe h der umgelegten Abschnitte der Karkassenlagen (2) nicht mehr also 85% der Höhe H des Stahlabriebprotektors beträgt.

2. Radialreifen nach Anspruch 1, welcher außerdem wenigstens eine Verstärkungsschicht aus organischen Faserkords aufweist, die an der Außenseite des Stahlabriebprotektors vorgesehen ist und sich über das obere Ende des Stahlabriebprotektors hinaus erstreckt, wobei der Kreuzungswinkel der Verstärkungsschichtkords mit den Stahlabriebprotecktorkords nicht weniger als 10° und der Winkel der Verstärkungsschichtkords 20°—75° bezüglich der Umfangsrichtung des Reifens ist.

## Revendications

1. Pneumatique à carcasse radiale comprenant une structure de nappes de carcasse (2) dans laquelle la totalité ou une partie des nappes de la carcasse formées de plusieurs câbles de polyester est repliée due côté intérieur des tringles de talon vers le côté extérieur et les autres nappes de la carcasse aboutissent à la partie intérieure ou inférieure des tringles de talon, et une bandelette talon d'acier (3) placée à l'extérieur des parties repliées des nappes de la carcasse, caractérisé en ce que l'angle des câbles d'acier de la bandelette (3) est compris dans une plage de 15 à 45° par rapport à la direction de la circonférence du pneumatique, la auteur H de la bandelette talon d'acier (3) est comprise dans une plage de 15 à 28% de la hauteur interne (IH) du pneumatique et la hauteur maximale h des parties repliées des nappes (2) de la carcasse n'est pas supérieure à 85% de la hauteur H de la bandelette talon d'acier.

2. Pneumatique à carcasse radiale selon la revendication 1, comprenant par ailleurs au moins une couche de renfort constituée de câbles de fibres organiques placée à l'extérieur de la bandelette talon d'acier (3) et se prolongeant au-dessus de l'extrémité supérieure de la bandelette talon d'acier, l'angle de croisement des câbles de la couche de renfort et des câbles de la bandelette talon d'acier n'étant pas inférieur à 10° l'angle des câbles de la couche de renfort est compris entre 20 et 75° par rapport à la direction de la circonférence du pneumatique.

FIG.1A

FIG.1B

FIG.2

FIG.3

**0 011 653**

FIG.4

FIG.5

2

0011 653

FIG. 6

FIG.7

3